(19) Europäisches Patentamt
European Patent Office
Office européen des brevets

(11) **EP 2 549 293 A1**

(12) **EUROPEAN PATENT APPLICATION**

(43) Date of publication:
 **23.01.2013 Bulletin 2013/04**

(51) Int Cl.:
 ***G01S 13/74*** (2006.01)

(21) Application number: **11005936.7**

(22) Date of filing: **20.07.2011**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**

(71) Applicant: **Astrium GmbH
 82024 Taufkirchen (DE)**

(72) Inventors:
 • **Hermsen, Markus
 82194 Gröbenzell (DE)**
 • **Schmitz-Peiffer, Andreas
 80797 München (DE)**

(74) Representative: **Avenhaus, Beate
 EADS Deutschland GmbH
 Patentabteilung
 81663 München (DE)**

(54) **Signal transponder**

(57) The invention relates to a signal transponder (14) for frequency conversion of signals (12) from unknown signal sources (10) comprising
input means (24) for receiving a signal (12) from an unknown signal source (10),
input filter (26; 27) for filtering the received signal (12),
an input signal amplifier (28; 29) for amplifying the received signal (12),
a mixer (30) for converting the frequency of the amplified and filtered received signal (12) to a predetermined frequency,
a local oscillator (32; 33) for generating a clock signal supplied to the mixer (30) for frequency conversion,
output filter (36; 37) for filtering the frequency converted signal,
an output signal amplifier (38) for amplifying the frequency converted signal, and
output means (40) for transmitting the filtered and amplified frequency converted signal.

Fig. 3

**Description**

TECHNICAL FIELD

The invention relates to a signal transponder according to claim 1.

BACKGROUND

A signal transponder receives signals such as RF (Radio Frequency) signals of an unknown signal source (unknown signals), converts the received signals to another frequency range differing from the frequency range of the unknown signals, and retransmits the converted signals. The converted signals can then be analyzed or processed by a reference receiver, designed for this other frequency range. In order not to lose valuable signal information and in order not to obscure signal information, the frequency conversion should be carried out in a very accurate way. The term 'accurate' as used herein has two different meanings.

One meaning is that a known, very exact reference frequency is used for the conversion which might be shifted with respect to the reference receiver and the unknown signal source due to Doppler-shift caused by movements of the unknown signal source, the signal transponder and the reference receiver, where all details of the Doppler shift are exactly known at the reference receiver.

The other meaning of 'accurate' is the precise knowledge of the timely behaviour of the reference frequency which is used for the frequency conversion. Again in this case all details of an eventually existing Doppler shift have to be exactly known as well at the point of the reference receiver.

Another important aspect to be considered for the application of signal transponder is the direct or indirect analysis of signals from unknown signal sources. The meaning of a direct and indirect analysis is explained in the following.

In a typical laboratory environment unknown signals are usually directly analyzed. For these purposes an unknown signal is directly fed from the unknown source into measurement equipment (reference receiver) which can deal with the unknown signal as the signal frequency lies within the operation range of the equipment and also the expected signal bandwidth does not exceed the capabilities of the equipment. Typical measurement equipment used for such signal analysis are e.g. spectrum analyzers, network analyzers and power-meters. These equipments are relying on frequency conversion and typically convert the frequency provided with the unknown signal into a much lower frequency which is suited for LF (Low Frequency) signal processing and A/D (Analog/Digital) signal conversion. The reference frequency required for the frequency conversion is generated by these equipments for themselves. For this purpose, such measurement equipment does not require any external frequency conversion so that usually no effects like Doppler-shifts have to be considered.

In contrast to this, an indirect analysis requires a signal transposing technique utilizing external frequency conversion which is usually more complicated as effects like Doppler-shifts have additionally to be observed. The external frequency conversion is required in case the existing communication channels do not allow a direct coupling between the reference receiver of the measurement equipment and the unknown signal source. Such ways the signal transponder is the required tool if it's about remote signal characterization or analysis. 'Remote signal characterization' refers herein to wired as well as wire-less operations.

SUMMARY OF INVENTION

It is an objective of the invention to provide a versatile signal transponder architecture, which can be used to convert signals from one frequency range into another frequency range with high accuracy and which is applicable for remote signal characterization.

This objective is achieved by the subject matter of the independent claims. Further embodiments are shown by the dependent claims.

An embodiment of the invention relates to a signal transponder for frequency conversion of signals from unknown signal sources comprising

input means for receiving a signal from an unknown signal source,

input filter for filtering the received signal,

an input signal amplifier for amplifying the received signal,

a mixer for converting the frequency of the amplified and filtered received signal to a predetermined frequency,

a local oscillator for generating a clock signal supplied to the mixer for frequency conversion,

output filter for filtering the frequency converted signal,

an output signal amplifier for amplifying the frequency converted signal, and

output means for transmitting the filtered and amplified frequency converted signal.

This signal transponder can be implemented at low costs and can be used for remote signal characterization.

It is particularly suitable for airborne platforms such as a satellite or UAV (Unmanned Aerial Vehicle) enabling a remote characterization of signals from unknown signal sources. The input and output means can be adapted for RF communication so that the signal transponder is provided for remote signal characterization of RF signals and for RF transmission of the frequency converted RF signals from an unknown signal source to a measurement station.

The local oscillator may comprise an internal oscillator controlled by an external clock signal provided by external clock signal generation means. Thus, a precise frequency conversion can be achieved without requiring expensive local means of the signal transponder for generating the clock signal used by the mixer for frequency conversion.

The external clock signal generation means may comprise means for receiving a reference clock signal and providing the received reference clock signal as external clock signal to the internal oscillator, and/or a GNSS receiver being adapted for deriving a reference clock signal from GNSS signals and providing the derived reference clock signal as external clock signal to the internal oscillator. For example, the reference clock signal may be received from a measurement station, which may be equipped with a highly stable reference clock. Alternatively, a GNSS chipset may be used to derive the reference clock signal since GNSS signals allow to generate a highly precise reference clock signal, particularly with a frequency generation unit of a GNSS receiver. The reference clock signal either received or derived can be used to stabilize a clock signal generation circuitry of the local oscillator.

The input filter, the input signal amplifier, and/or the output filter and the local oscillator may be adjustable and the transponder may further comprise a control unit for adjusting the input filter, the input signal amplifier, and/or the output filter and the local oscillator to a frequency range of interest. Thus, a very flexible platform for a signal transponder can be implemented, which is able to convert signals from unknown signal sources with different frequency ranges. The control unit may be programmable to adjust the signal transponder to a frequency of interest.

Such a programming of the control unit may be also performed from a remote location such as a measurement station in that the control unit may be adapted to receive control commands from the measurement station for tuning the transponder to a frequency range of interest.

The control unit may be further adapted to transmit actual attitude and/or speed data of the transponder to a measurement station. With these data, the measurement station can consider Doppler shifts caused by movements of the signal transponder when analyzing the frequency converted signal. Thus, the accuracy of the remote signal characterization performed by the measurement station may increase. These data are also helpful for a determination of the location of an unknown signal source.

The control unit may be adapted to communicate with the measurement station over a dedicated communication channel differing from the communication channel for transmitting the filtered and amplified frequency converted signal. For example, the control unit may communicate in a frequency range differing from the one of the frequency converted signal in order to avoid interferences which could influence the frequency converted signal and, thus, the signal characterization.

The transponder may be further configured to determine its actual speed and a Doppler shift of the signal received from the unknown signal source according to the following equation:

$$f_{ST} = f_{SUT} \cdot \frac{\sqrt{1 - \dfrac{(\vec{v} \cdot \vec{e}_{SUT-ST})^2}{c_0^{\,2}}}}{1 - \dfrac{\vec{v} \cdot \vec{e}_{SUT-ST}}{c}}$$

wherein $f_{ST}$ is the frequency of the received signal, $\vec{v}$ is the velocity vector in space of the signal transponder with respect to the velocity of the unknown signal source, $\vec{e}_{SUT-ST}$ is the unity vector describing the direction from the unknown signal source to the signal transponder, $f_{SUT}$ is the frequency used by the unknown signal source to transmit the signal towards the signal transponder, c describes the signal propagation speed in medium which is close to the speed of light, and $C_0$ is the speed of light in vacuum, and wherein the transponder is configured to convert the frequency $f_{SUT}$ used by the unknown signal source to transmit the signal towards the signal transponder. For speed determination, the transponder may for example use an internal GNSS receiver. The Doppler shift between the signal transponder and the unknown signal source in the uplink direction from the unknown signal source to the transponder can be eliminated, or at least its influence can be significantly reduced resulting in a more accurate remote signal characterization.

A further embodiment of the invention relates to a measurement station for receiving and processing a frequency converted signal of an unknown signal source from one or more signal transponder according to the invention and as disclosed herein, wherein the measurement station comprises receiving means for the frequency converted signal, and a measurement device for signal analysis of the frequency converted signal. The receiving means can for example comprise an antenna for receiving frequency converted RF signals from the signal transponder. It is also possible to transmit the frequency converted signal from a signal transponder to the measurement station via a wired or an optical communication connection.

The station may be further configured to determine its actual speed and a Doppler shift of the frequency converted signal received from a signal transponder according to the following equation:

$$f_{MS} = f_{ST} \cdot \frac{\sqrt{1 - \dfrac{(\vec{v} \cdot \vec{e}_{ST-MS})^2}{c_0^{\,2}}}}{1 - \dfrac{\vec{v} \cdot \vec{e}_{ST-MS}}{c}}$$

wherein $f_{MS}$ is the frequency received at the measurement station, $\overleftarrow{v}$ is the velocity vector in space of the signal transponder with respect to the velocity of the measurement station, $\overleftarrow{e}_{ST-MS}$ is the unity vector describing the direction from the signal transponder to the measurement station, $f_{ST}$ is the frequency used by the signal transponder to transmit the signal towards the measurement station, $c$ describes the signal propagation speed in medium which is close to the speed of light, and $c_0$ is the speed of light in vacuum, and wherein the measurement station is configured to analyse the frequency converted signal considering the frequency $f_{ST}$ used by the signal transponder to transmit the signal towards the measurement station. For speed determination, the measurement station may for example use an internal GNSS receiver. The Doppler shift between the signal transponder and the measurement station in the downlink direction from the transponder to the measurement station can be eliminated or at least its influence can be significantly reduced resulting in a more accurate remote signal characterization.

The station may be further adapted to compute the location of the unknown signal source based on TDOA (Time Difference of Arrival), FDOA (Frequency Difference of Arrival) and Doppler measurements of signals received by one or more signal transponders from the unknown signal source and on known attitudes of the signal transponders and the measurement station. The attitudes of the signal transponders can be determined with transponder internal GNSS receivers and transmitted to the measurement station. The measurement station can also determine its actual attitude with an internal GNSS receiver.

A yet further embodiment of the invention relates to a system for analyzing signals from unknown signal sources comprising one or more signal transponder according to the invention and as disclosed herein, and a measurement station according to the invention and as disclosed herein. Such a system can be used for remote signal characterization in areas comprising unknown signal sources, particularly when a direct characterization of an unknown signal source is not possible.

The one or more signal transponder may be airborne systems using RF communication for transmitting frequency converted signals to the measurement station. This allows to remotely analyzing unknown signal sources in particularly in inaccessible areas.

The system may comprise one of the following:

at last one moving signal transponder if an unknown signal source is stationary and uses the same transmit frequency over the time;

at least two two signal transponders moving with different speeds and directions of space with regard to an unknown signal source if the unknown signal source is ground based and slowly moving;

three signal transponders moving with different speeds and directions of space with regard to an unknown signal source if the unknown signal source is slowly moving in 3 dimensions;

four signal transponders moving with different speeds and directions of space with regard to an unknown signal source if the unknown signal source is fast moving in 3 dimensions.

These and other aspects of the invention will be apparent from and elucidated with reference to the embodiments described hereinafter.

The invention will be described in more detail hereinafter with reference to exemplary embodiments. However, the invention is not limited to these exemplary embodiments.

BRIEF DESCRIPTION OF DRAWINGS

Fig. 1   shows the basic operating principle of a signal transponder according to the invention;

Fig. 2   shows an example of a remote analysis of an unknown signal source using moving signal transponder according to the invention;

Fig. 3   shows the basic concept of an embodiment of a signal transponding circuit according to the invention;

Fig. 4   shows a block diagram of a detail of a GPS chipset being able to generate a highly stable clock signal suitable for a signal transponder according to the invention; and

Fig. 5   shows an embodiment of flexible precision signal transponder according to the invention.

DESCRIPTION OF EMBODIMENTS

In the following, functionally similar or identical elements may have the same reference numerals. Embodiments of the invention relate to RF transmission between an unknown signal source and a signal transponder as well as between a signal transponder and a measurement station. However, the present invention is not limited to RF transmission but can also use other wireless transmission technologies such as optical or ultrasonic transmission or wired transmission over cables. Different transmission technologies can also be mixed according to the invention, for example RF transmission can be used between an unknown signal source and a signal transponder while the wired transmission is used between the signal transponder and the measurement station.

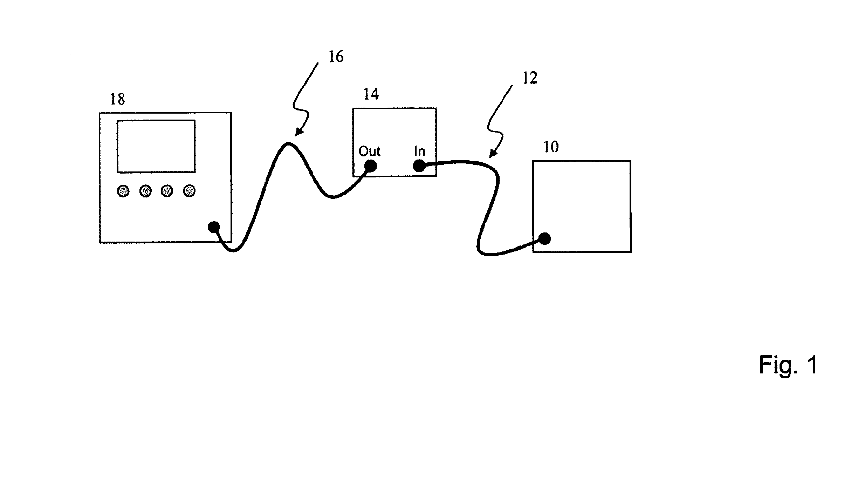

The basic operating principle of a precision signal transponder according to the invention is illustrated in Fig. 1. A signal source 10 generates a signal 12 on frequency f1 with the bandwidth Δf1 (signal of interest). The signal source 10 can be an unknown signal source, i.e. no parameters of the source are known. The frequency f1 can either not be directly used by the measurement device 18 which is supposed to analyze the signal of interest 12 or the transport channel is not suited for conveying the signal of interest 12 to the measurement device 18. By using a signal transponder 14, the signal of interest 12 is converted from frequency f1 to frequency f2 while ideally maintaining its native bandwidth Δf1 (converted signal of interest 16). The measurement device 18 can now analyze the provided signal 16. Under the assumption that the frequency conversion behaviour of the signal transponder 14 is well known, the measurement results can numerically be corrected by consideration of the frequency shift applied by the signal transponder 14. Such ways a signal characterization of the original f1 signal of interest 12 is obtained although the communication channel from the signal source 10 to the measurement device 18 or the measurement device 18 itself is not able to cope with f1 signals.

A prominent use case for a signal transponder is the remote signal analysis, i.e. the indirect analysis of signals of a signal source, e.g. RF signals transmitted by an unknown RF transmitter. Several different motivations exist why remote analysis in some cases is advantageous compared to direct analysis. One important reason is that there is no need to place expensive, heavy and manned equipment in the line of sight to an unknown signal source. With utilization of precision signal transponder according to the invention it is sufficient to have the signal transponder in range of both - the measurement device and the unknown signal source.

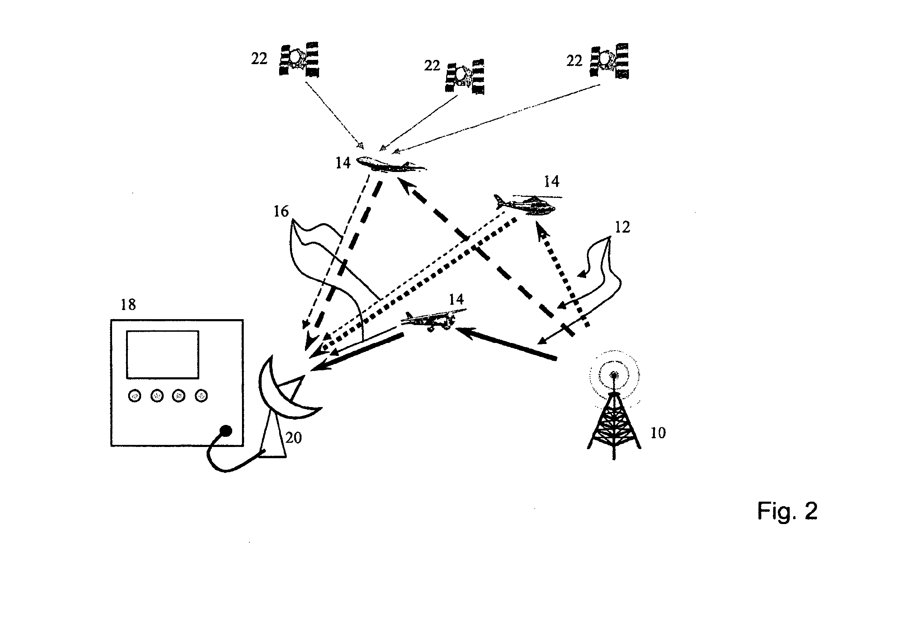

For example, a signal transponder can be located on a flying platform moving over an area, in which an unknown signal source to be remotely analyzed is positioned. Such a scenario is shown in Fig. 2. In this scenario, the precision signal transponder 14 are on board of planes which are moving between the measurement station, which comprises the measurement device 18 and an antenna 20 for receiving the RF transmitted converted signals from the transponder 14, and an unknown signal source 10, for example a RF station.

The attitude and speed of each plane and signal transponder 14 can be obtained by means of a GNSS (Global Navigation Satellite System) which is illustrated by GNSS satellites 22 for the upper plane only to keep the sketch simple. This information is broadcasted in real-time from each one of the signal transponders 14 to the measurement station on ground in parallel to the frequency converted signal 16. Having the attitude and speed of the planes available allows the measurement device 18 of the measurement station to remove the Doppler impact of the downlink signal (signal from the moving signal transponder 14 onboard of the planes to the measurement station) as the relative velocity between a moving signal transponder 14 and the measurement station can be computed easily from this information. After this, the measurement data still contain the Doppler shift of the uplink signal connection (signal from the unknown signal source 10 to the moving signal transponder 14).

This remaining uncertainty can be eliminated by four concepts according to the invention:

A) The unknown signal source 10 is stationary and uses over time the same transmit frequency. In this case only one signal transponder 14 in the area is sufficient to determine over time the exact position on ground of the signal source 10 of interest by observation of the Doppler change in relation to course (direction) changes of the plane with the signal transponder 14.

B) The unknown signal source 10 is ground based but slowly moving. In this case two signal transponder 14 are required which must not have the same relative speed with respect to the unknown signal source (which practically will never happen over a longer period). The analysis of the two different Doppler shifts obtained by the two signal transponder 14 after having removed the known Doppler shift of the downlink connection allows pinpointing and tracking the movement of the unknown signal source 10 on ground while the signal itself can be analyzed.

C) The unknown signal source 10 is slowly moving in all 3 dimensions (airborne). In this case a third signal transponder 14, as shown in Fig. 2, is required to be able to properly pinpoint and track the movement of the signal source 10 in all three dimensions. Again, as in case of scenario B), it is essential that all three signal transponder 14 do not move in the same direction with respect to the unknown signal source 10.

D) The unknown signal source 10 is fast moving in all 3 dimensions (airborne). This is the most complex case and in order to solve the Doppler analysis for the uplink signal a fourth signal transponder 14 is required. So with four planes it will be possible to determine not only the actual position of the fast moving unknown signal source but as well the speed and while comparing successive data also it's attitude.

For practical reasons, a fast moving plane has herein been considered as platform for a precision signal transponder. If instead a slow moving or even a stationary airborne platform is used (e.g. a helicopter or a balloon with altitude regulation) then the analysis of these data becomes simplified and scenario D) might be covered with only 3 airborne platforms.

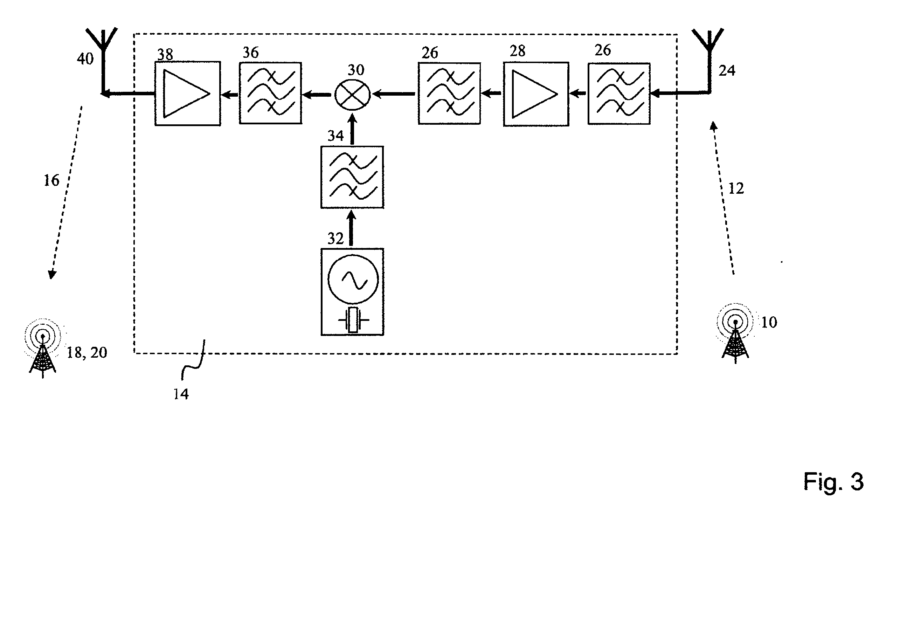

In the following, an embodiment of a precision RF signal transponder 14 according to the invention is described in detail with reference to Fig. 3 showing a block diagram of the embodiment. The core elements of the precision RF signal transponder 14 are:

-    An input antenna 24 to receive the desired signal 12 (signal of interest 12 from an unknown RF signal source 10).

-    An input band-filter 26 or at least a low-pass filter for filtering the received signal 12.

-    A LNA (Low Noise Amplifier) 28 to amplify the received signal 24.

-    A mixer 30 to convert the frequency of the received signal 12 to a frequency suitable for analysis of the received signal by the measurement equipment.

-    A suited local oscillator 32 for generating a stable and precise clock signal usable by the mixer 30 for frequency conversion.

-    A local oscillator bandpass filter 34.

-    An output signal bandpass filter 36 or a lowpass filter with the capability to sufficiently suppress mirror frequencies.

-    An output signal amplifier 38 for amplifying the frequency converted signal for RF transmission.

-    An output antenna 40 to transmit the frequency converted signal 16 to a measurement station 18, 20 for remote signal analysis.

In the following, the local oscillator, the frequency conversion, and Doppler shift considerations will be described in detail.

The local oscillator

An essential element of the precision RF signal transponder 14 is the local oscillator: For a precision signal transponder there are special requirements associated with the local oscillator 32: in order to be able to compute the exact behaviour of the signal of interest 12 from the frequency shifted signal 16 which is received at the measurement equipment, the frequency and phase error of this local oscillator 32 is decisive.

The error of the local oscillator 32 in combination with the measurement error, introduced by the measurement equipment, has either to be lower than the frequency error of the output signal is to be expected (see (equation 1), or it has to be determined in real-time and communicated to the measurement equipment for appropriate consideration.

$$\mathcal{E}f_{Total} = \mathcal{E}f_{Measurement\_eq.} + \mathcal{E}f_{Local\_Oscillator}$$

(equation 1: frequency failure composition of the precision RF signal transponder 14)

In (equation 1 $\varepsilon f$ is the individual frequency error. In order to keep the total frequency error $\varepsilon f$Total as small as possible, the error of the local oscillator $\varepsilon f$Local_Oscillator should be kept small. Thus, a precise local oscillator frequency generation is desirable. This can be realized by two different embodiments:

A) by having a sufficiently accurate and stable clock in the signal transponder unit 14;

B) by providing a precise external clock signal which can is utilized by the mobile signal transponder 14 to stabilize an internal oscillator.

In case of embodiment A) at least an OCXO (Oven Controlled Crystal Oscillator) or better an atomic clock based oscillator should be applied as local oscillator 32 in order not to downgrade the precision which can be obtained by the native measurement equipment.

In case of embodiment B) an external reference 'carrier frequency' can be transmitted from the measurement station which in this case is equipped with a highly stable reference clock (OCXO or atomic clock stabilized) to the signal transponder unit. The signal transponder unit receives this carrier frequency and stabilizes by a PLL (Phase Locked Loop) circuit an internal VCO (Voltage Controlled Oscillator). In such case, the local oscillator 32 is implemented by a local clock generation unit, which is controlled by an external signal. In case attitude and speed of the moving signal transponder platform is available together with the exact position of the transmit antenna transmitting the carrier frequency, it is possible to directly consider potential Doppler shifts in the PLL regulation loop.

Another concept is the use of a GNSS receiver for stabilizing a PLL circuit controlled VCO. An autonomous GNSS receiver can be added to a mobile signal transponder according to the Invention. The GNSS receiver allows determining the actual attitude and speed of the transponder for considering the Doppler-shift of the moving transponder with respect to the measurement station and with respect to the signal source of interest. Furthermore, the highly stable clock signal generated by the GNSS receiver can be used for the signal transponder as will be described in the following In detail by means of a GPS (Global Positioning System) receiver.

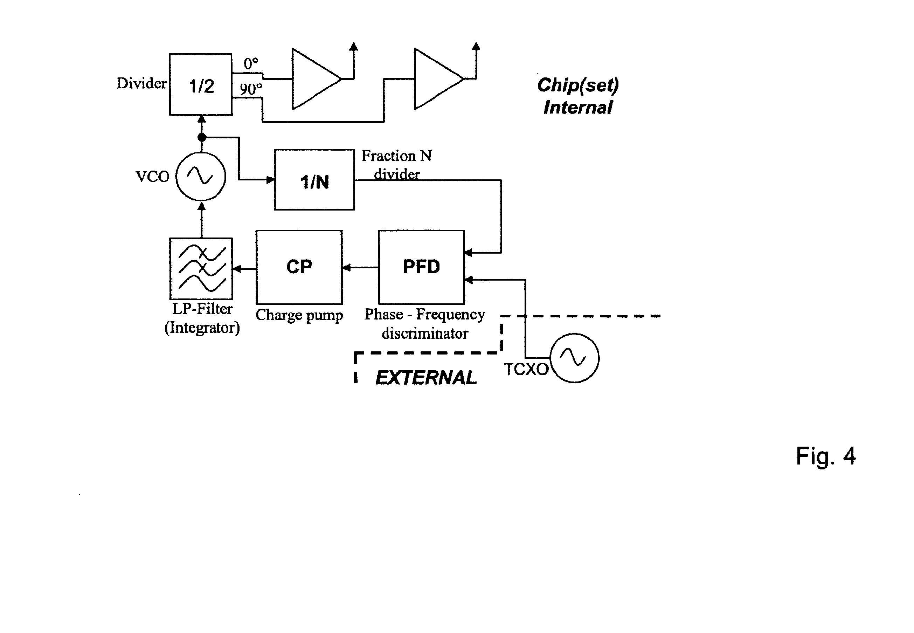

Fig. 4 shows that detail of a GPS chipset which is finally dealing with the generation of a highly stable clock signal. A TCXO (Temperature Controlled Crystal Oscillator) is providing a reference frequency for the initial signal acquisition phase. For this a reasonable stable clock is already required as otherwise the weak satellite signals will not be identified and such the receiver cannot lock to them. Finally by means of a PLL circuit, which comprises a PFD (Phase Frequency Discriminator), a CP (Charge Pump), a LP (Low Pass) filter, and a fraction N divider, the VCO is closely coupled to the highly precise signals received from the GPS satellites. Typically this is the L1 carrier frequency. Especially in case of having a 3D fixing state with the GPS receiver the VCO output is closely locked to the GPS satellite time system - which is the most precise time available. If this highly stabilized VCO frequency is fed out of the baseband chipset, the signal transponder can take advantage of it for frequency conversion purposes. As shown in Fig. 4, the VCO frequency typically is not directly the L1 carrier frequency but a multiple of it. This means that the VCO in this example uses the double frequency of L1.

Outside the GNSS baseband chip section, the stabilized VCO signal can be used as reference signal to steer either a dedicated PLL for generating the desired highly precise local oscillator frequency of the signal transponder or alternatively a clock division component can be used to derive the desired frequency in a more quantized way.

PLL as well as clock dividing components can usually be programmed to adjust the output to different needs which provides in this case additional flexibility to adapt for various frequency bands while the communication channel between the signal transponder and the measurement station might be limited to one specific band only. In such a scenario especially the PLL circuit is advantageous as the resulting frequency can be higher or lower than the reference frequency.

If using such an adjustable local-oscillator frequency, the signal transponder as well should be equipped with programmable filters at the input port and the local oscillator port at least to fully exploit the additional flexibility of the system. The output port does only need adjustable filters in case it needs to provide the converted signals on various channels to the measurement station.

The frequency conversion

The frequency conversion is principally carried out by a conventional up- or down-conversion by means of a mixer, as shown in Fig. 3.

Although Fig. 3 only shows a simplified variant of the signal transponder architecture, it already contains all major elements. Not contained in Fig. 3 is the required information on speed and attitude of the signal transponder carrying platform which has to be available at the measurement station. Such information can either be transmitted in real-time from the signal transponder carrying platform (by means of a GNSS receiver) or alternatively this information might be obtained by other means e.g. RADAR.

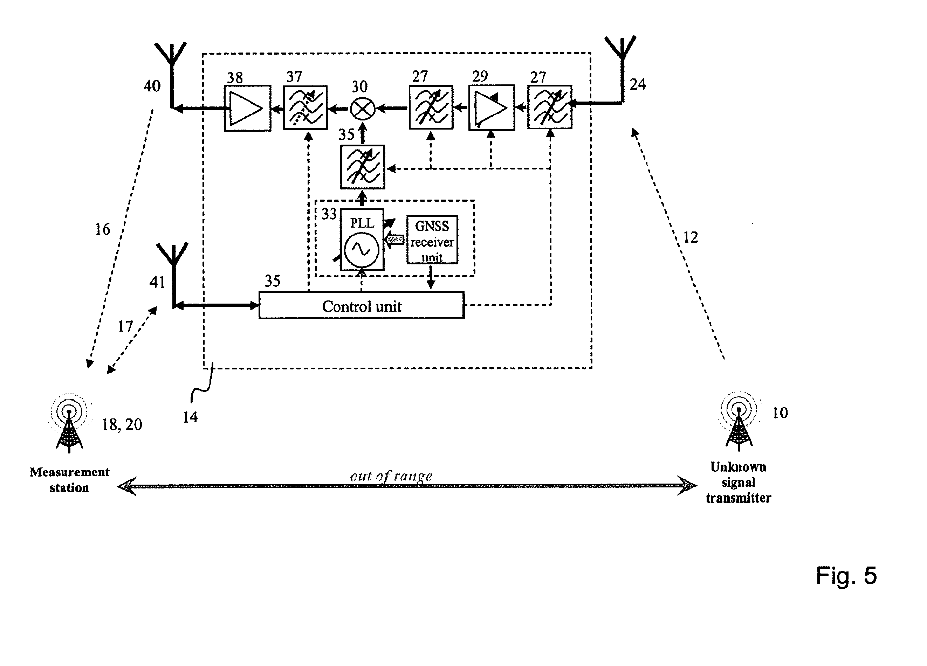

The whole concept can be extended at level of the individual elements in order to increase the general usability. These extensions are shown in Fig. 5 together with the coarse environment the signal transponder is operating in.

The signal transponder 14 has flexibility to be tuned to the frequency range of interest. A configurable local oscillator 33 implemented by a PLL controlled by a GNSS receiver unit as described above is supporting this as by combination of adjustable input filters 27 and a flexible but precise local oscillator 33 the system is able to convert frequency bands out of a wide spectrum to a dedicated communication channel 16 available for communication with the relevant measurement station. Adding an adjustable output signal band filter 37 allows the system to adapt to different communication channels. Additional to its original function this system utilizes another two-way communication link 17 to and from the measurement station. By this the measurement station is able to remotely configure the signal transponder 14 according to actual needs and on the other hand the signal transponder 14, which is here equipped with a GNSS receiver unit, is able to transmit actual attitude and speed information via communication channel 17 so that the measurement station is able to respect actual Doppler shifts of the signals obtained. As described in the chapter "The local oscillator" here the GNSS receiver unit also acts as a stable clock signal reference which is required by the PLL circuit of the configurable local oscillator 33 to generate an accurate local oscillator frequency.

Another option to improve the system is provided if utilizing a similarly precise local oscillator source for the generation of the carrier frequency of the communication channel between control unit and measurement station. In such a case the signal transponder would provide a highly precise carrier frequency signal, as also this one is coupled to the GNSS clock accuracy. By this it is possible at the measurement station to measure the Doppler shift of this carrier frequency signal. By this an over determined solution is given: A) by the computed numerical Doppler shift and B) by this measurement result. This over determined solution now allows for computing the average signal propagation speed (speed of light) for the distance measurement station to mobile signal transponder. The knowledge of this allows increasing accuracy of the analyzed signal by being better able to respect the detailed impact of the Doppler shift (at least for the distance measurement station - signal transponder).

Doppler shift consideration

Especially in case the individual signal transponder is attached to a fast moving platform (for example a plane), accuracy of the signal analysis can be increased if the Doppler shifts of the signal of the unknown signal source at the signal transponder and the one of the signal being sent by the signal transponder to the measurement station are taken into account.

Frequency shift between measurement station and signal transponder

The Doppler shifted frequency which is received by the measurement station is:

$$f_{MS} = f_{ST} \cdot \frac{\sqrt{1 - \frac{(\vec{v} \cdot \vec{e}_{ST-MS})^2}{c_0^2}}}{1 - \frac{\vec{v} \cdot \vec{e}_{ST-MS}}{c}}$$

(equation 2: The Doppler shift between a signal transponder and the measurement station)

In equation 2 f$_{MS}$ is the frequency received at the measurement station, $\overleftarrow{v}$ is the velocity vector In space of the signal transponder with respect to the velocity of the measurement station, $\vec{e}_{ST\text{-}MS}$ is the unity vector describing the direction from the signal transponder to the measurement system and f$_{ST}$ is the frequency used by the signal transponder to transmit the signals towards the measurement station. Finally c describes the signal propagation speed in medium which is close to the speed of light and C$_0$ is the speed of light (in vacuum).

Equation 2 is covering the general scenario including the one where the measurement station and signal transponder are in motion.

The measurement station can be configured to analyse the frequency converted signal considering the frequency f$_{ST}$ used by the signal transponder to transmit the signal towards the measurement station. Thus, Doppler shift effect can be reduced or even eliminated and the signal analysis can be performed more accurate by the measurement station.

Frequency shift between signal transponder and unknown signal source

In analogy the Doppler shift of the unknown signal can be expressed as:

$$f_{ST} = f_{SUT} \cdot \frac{\sqrt{1 - \dfrac{(\vec{v} \cdot \vec{e}_{SUT\text{-}ST})^2}{c_0{}^2}}}{1 - \dfrac{\vec{v} \cdot \vec{e}_{SUT\text{-}ST}}{c}}$$

(equation 3: The Doppler shift between an unknown signal emitter and the signal transponder)

In equation 3 f$_{ST}$ is the frequency received at the signal transponder, $\overleftrightarrow{v}$ is the velocity vector in space of the signal transponder with respect to the velocity of the unknown signal source, $\vec{e}_{SUT\text{-}ST}$ is the unity vector describing the direction from the unknown signal source to the signal transponder and f$_{SUT}$ is the frequency used by the unknown signal source to transmit the signal towards the signal transponder. Finally c describes the signal propagation speed in medium which is close to the speed of light and C$_0$ is the speed of light (in vacuum).

Equation 3 is covering the general scenario including the one where measurement station and signal transponder are in motion.

In order to reduce or eliminate the Doppler shift between an unknown signal emitter and the signal transponder, the transponder is configured to convert the frequency f$_{SUT}$ used by the unknown signal source to transmit the signal towards the signal transponder. Thus, the frequency converted signal, which is transmitted from the signal transponder to the measurement station, is more accurate than without a Doppler shift determination and correction.

In a further embodiment of the invention, the measurement station can be adapted to compute the location of an unknown signal source. This requires the knowledge of attitude of the measurement station and of each signal transponder from which the measurement station receives a frequency converted signal from the unknown signal source. Furthermore, the frequency conversion should be done based on high precision IF frequencies in the signal transponder. Based on TDOA, FDOA and Doppler information, the measurement station can then compute the location of the unknown signal source, wherein the application of TDOA and FDOA as well as Doppler information for location determination of a signal source is generally known to a skilled person in the field of art and, therefore, will not be described further herein.

The present invention suggests a flexible architecture for a signal transponder applicable for remote signal analysis and enabling a signal analysis with a high accuracy.

REFERENCE NUMERALS AND ACRONYMS

10    (unknown) signal source

12    signal on frequency f1 with the bandwidth Δf1 (signal of interest)

14    precision signal transponder

16    signal on frequency f2 with the bandwidth Δf1 (converted signal of interest)

| | |
|---|---|
| 17 | control communication between signal transponder and measurement equipment |
| 18 | measurement device |
| 20 | antenna of measurement station |
| 22 | GNSS satellite |
| 24 | input antenna to receive the signal of interest |
| 26 | input band-filter |
| 27 | adjustable Input band-filter |
| 28 | LNA to amplify the received signal of interest |
| 29 | adjustable LNA |
| 30 | mixer for frequency conversion |
| 32 | local oscillator |
| 33 | PLL controlled by GNSS receiver unit |
| 34 | local oscillator bandpass filter |
| 35 | control unit |
| 36 | output signal bandpass filter with the capability to sufficiently suppress mirror frequencies |
| 37 | adjustable output signal bandpass filter |
| 38 | output signal amplifier |
| 40 | output antenna to transmit the converted signal of interest |
| 41 | antenna for signal communication with measurement equipment |
| A/D | Analog/Digital |
| CP | Charge Pump |
| FDOA | Frequency Difference of Arrival |
| GNSS | Global Navigation Satellite System |
| GPS | Global Positioning System |
| LF | Low Frequency |
| LNA | Low Noise Amplifier |
| LP | Low Pass |
| OCXO | Oven Controlled Crystal Oscillator |
| PFD | Phase Frequency Discriminator |

PLL        Phase Locked Loop

RF         Radio Frequency

TCXO       Temperature Controlled Crystal Oscillator

TDOA       Time Difference of Arrival

UAV        Unmanned Aerial Vehicle

VCO        Voltage Controlled Oscillator

**Claims**

1.  A signal transponder (14) for frequency conversion of signals (12) from unknown signal sources (10) comprising

    - input means (24) for receiving a signal (12) from an unknown signal source (10),
    - input filter (26; 27) for filtering the received signal (12),
    - an input signal amplifier (28; 29) for amplifying the received signal (12),
    - a mixer (30) for converting the frequency of the amplified and filtered received signal (12) to a predetermined frequency,
    - a local oscillator (32; 33) for generating a clock signal supplied to the mixer (30) for frequency conversion,
    - output filter (36; 37) for filtering the frequency converted signal,
    - an output signal amplifier (38) for amplifying the frequency converted signal, and
    - output means (40) for transmitting the filtered and amplified frequency converted signal.

2.  The transponder of claim 1, wherein the local oscillator (32) comprises an internal oscillator controlled by an external clock signal provided by external clock signal generation means.

3.  The transponder of claim 2, wherein the external clock signal generation means comprise

    - means for receiving a reference clock signal and providing the received reference clock signal as external clock signal to the internal oscillator, and/or
    - a GNSS receiver being adapted for deriving a reference clock signal from GNSS signals and providing the derived reference clock signal as external clock signal to the internal oscillator.

4.  The transponder of claim 1, 2 or 3, wherein the input filter (27), the input signal amplifier (29), and/or the output filter (37) and the local oscillator (33) are adjustable and the transponder (14) further comprises a control unit (35) for adjusting the input filter (27), the input signal amplifier (29), and/or the output filter (37) and the local oscillator (33) to a frequency range of interest.

5.  The transponder of claim 4, wherein the control unit (35) is further adapted to receive control commands from a measurement station (18, 20) for tuning the transponder (14) to a frequency range of interest.

6.  The transponder of claim 4 or 5, wherein the control unit (35) is further adapted to transmit actual attitude and/or speed data of the transponder (14) to a measurement station (18, 20).

7.  The transponder of claim 5 or 6, wherein the control unit (35) is adapted to communicate with the measurement station (18, 20) over a dedicated communication channel (17) differing from the communication channel (16) for transmitting the filtered and amplified frequency converted signal.

8.  The transponder of any of the preceding claims, being further configured to determine its actual speed and a Doppler shift of the signal (12) received from the unknown signal source (10) according to the following equation:

$$f_{ST} = f_{SUT} \cdot \frac{\sqrt{1 - \frac{(\vec{v} \cdot \vec{e}_{SUT-ST})^2}{c_0^{\,2}}}}{1 - \frac{\vec{v} \cdot \vec{e}_{SUT-ST}}{c}}$$

wherein $f_{ST}$ is the frequency of the received signal (12), $\overleftarrow{v}$ is the velocity vector in space of the signal transponder (14) with respect to the velocity of the unknown signal source (10), $\overleftarrow{e}_{SUT-ST}$ is the unity vector describing the direction from the unknown signal source (10) to the signal transponder (14), $f_{SUT}$ is the frequency used by the unknown signal source (10) to transmit the signal towards the signal transponder (14), c describes the signal propagation speed in medium which is close to the speed of light, and $C_0$ is the speed of light in vacuum, and wherein the transponder (14) is configured to convert the frequency $f_{SUT}$ used by the unknown signal source (10) to transmit the signal towards the signal transponder (14).

9.  A measurement station (18, 20) for receiving and processing a frequency converted signal (16) of an unknown signal source (10) from one or more signal transponders (14) according to the preceding claims, wherein the measurement station (18, 20) comprises

    - receiving means (20) for the frequency converted signal (16), and
    - a measurement device (18) for signal analysis of the frequency converted signal (16).

10. The station of claim 9, being further configured to determine its actual speed and a Doppler shift of the frequency converted signal (16) received from a signal transponder (14) according to the following equation:

$$f_{MS} = f_{ST} \cdot \frac{\sqrt{1 - \frac{(\vec{v} \cdot \vec{e}_{ST-MS})^2}{c_0^{\,2}}}}{1 - \frac{\vec{v} \cdot \vec{e}_{ST-MS}}{c}}$$

wherein $f_{MS}$ is the frequency received at the measurement station (18, 20), $\overleftarrow{v}$ is the velocity vector in space of the signal transponder (14) with respect to the velocity of the measurement station (18, 20), $\overleftarrow{e}_{ST-MS}$ is the unity vector describing the direction from the signal transponder (14) to the measurement station (18, 20), $f_{ST}$ is the frequency used by the signal transponder (14) to transmit the signal towards the measurement station (18, 20), c describes the signal propagation speed in medium which is close to the speed of light, and $C_0$ is the speed of light in vacuum, and wherein the measurement station (18, 20) is configured to analyse the frequency converted signal (16) considering the frequency $f_{ST}$ used by the signal transponder (14) to transmit the signal towards the measurement station (18, 20).

11. The station of claim 9 or 10, being further adapted to compute the location of the unknown signal source based on TDOA, FDOA and Doppler measurements of signals received by signal transponders (14) from the unknown signal source (10) and on known attitudes of the signal transponders and the measurement station.

12. A system for analyzing signals (12) from unknown signal sources (10) comprising

    - one or more signal transponders (14) according to the claims 1 to 8, and
    - a measurement station (18, 20) according to claim 9 to 11.

13. The system of claim 12, wherein the one or more signal transponders (14) are airborne systems using RF communication for transmitting frequency converted signals to the measurement station (18, 20).

**14.** The system of claim 13, comprising one of the following:

- at least one moving signal transponder (14) if an unknown signal source (10) is stationary and uses the same transmit frequency over the time;
- at least two signal transponders (14) moving with different speeds and directions in space with regard to an unknown signal source (10) if the unknown signal source is ground based and slowly moving:
- at least three signal transponders (14) moving with different speeds and directions in space with regard to an unknown signal source (10) if the unknown signal source is slowly moving in 3 dimensions;
- at least four signal transponders (14) moving with different speeds and directions in space with regard to an unknown signal source (10) if the unknown signal source is fast moving in 3 dimensions.

Fig. 1

Fig. 2

Fig. 3

Fig. 4

Fig. 5

Europäisches
Patentamt

European
Patent Office

Office européen
des brevets

## EUROPEAN SEARCH REPORT

**Application Number**

EP 11 00 5936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/52498 A1 (PINPOINT CORP [US]) 8 September 2000 (2000-09-08) | 1,8-12, 14 | INV. G01S13/74 |
| Y | * page 11, line 6 - page 13, line 3; figures 3,26 * <br> * page 86, line 12 - page 87, line 6 * | 2-7,13, 14 | |
| Y | US 2002/133294 A1 (FARMAKIS TOM S [US] ET AL) 19 September 2002 (2002-09-19) * paragraphs [0046] - [0048], [0072]; figures 2,6,7 * | 2-6,13, 14 | |
| Y | US 5 570 095 A (DROUILHET JR PAUL R [US] ET AL) 29 October 1996 (1996-10-29) * column 3, line 11 - column 4, line 55; figures 3,5,6,7 * <br> * column 6, line 28 - column 7, line 22 * | 4-7,13, 14 | |
| X | US 2006/012476 A1 (MARKHOVSKY RUSS [US] ET AL) 19 January 2006 (2006-01-19) * paragraphs [0084] - [0088], [0134] - [0136]; figures 2,3,5,6a * | 1,9,12 | |
| X | US 2005/046608 A1 (SCHANTZ HANS GREGORY [US] ET AL) 3 March 2005 (2005-03-03) * paragraphs [0140] - [0163], [0174] - [0175]; figures 12,13,16 * | 1,9,12 | **TECHNICAL FIELDS SEARCHED (IPC)** <br> G01S |

The present search report has been drawn up for all claims

| Place of search | Date of completion of the search | Examiner |
|---|---|---|
| Munich | 16 December 2011 | Stocken, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                              

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 00 5936

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2011

| Patent document cited in search report | | Publication date | Patent family member(s) | | Publication date |
|---|---|---|---|---|---|
| WO 0052498 | A1 | 08-09-2000 | AU 3718100 A<br>EP 1212635 A1<br>WO 0052498 A1 | | 21-09-2000<br>12-06-2002<br>08-09-2000 |
| US 2002133294 | A1 | 19-09-2002 | NONE | | |
| US 5570095 | A | 29-10-1996 | NONE | | |
| US 2006012476 | A1 | 19-01-2006 | NONE | | |
| US 2005046608 | A1 | 03-03-2005 | US 2005046608 A1<br>US 2008165050 A1<br>US 2010103025 A1<br>US 2011148714 A1 | | 03-03-2005<br>10-07-2008<br>29-04-2010<br>23-06-2011 |

EPO FORM P0459

For more details about this annex : see Official Journal of the European Patent Office, No. 12/82